# EUROPEAN PATENT APPLICATION

(11) **EP 4 722 977 A1**
(43) Date of publication of application: **08.04.2026**
(21) Application number: 24810088.5
(22) Date of filing: 17.04.2024
(51) Int. Cl.: G06K 19/07, G06K 17/00

(54) **MERCHANDISE STOCK-TAKING METHOD AND SYSTEM, AND COMPUTER DEVICE AND STORAGE MEDIUM**

(30) Priority: 24.05.2023 CN 202310595293
(71) Applicant: Hanshow Technology Co., Ltd., Jiaxing, Zhejiang 314031 (CN)
(72) Inventor: LIANG, Min, Jiaxing, Zhejiang 314031 (CN); FU, Zhe, Jiaxing, Zhejiang 314031 (CN); HOU, Shiguo, Jiaxing, Zhejiang 314031 (CN)
(74) Representative: Patentanwälte Olbricht Buchhold Keulertz
(86) International application number: PCT/CN2024/088163
(87) International publication number: WO 2024/239841

(57) **Abstract**

The present disclosure provides a merchandise stock-taking method and system, a computer device and a storage medium. The method includes: an autonomous mobile device sends a RFID excitation signal in a stock-taking area, so that all RFID tags that receive the RFID excitation signal in the stock-taking area repeatedly send their tag identity information within a certain duration; and then the base station counts a merchandise stock-taking result in the stock-taking area according to all the tag identity information sent by the plurality of electronic shelf labels. Therefore, through the mutual communication among the autonomous mobile device, the RFID tags on the merchandise, the electronic shelf labels on the shelf and the base station, the present disclosure realizes the automatic stock-taking of shelf merchandise, thereby improving the merchandise stock-taking efficiency. The plurality of electronic shelf labels in the stock-taking area receive the tag identity information sent by the RFID tag in the stock-taking area at a short distance and in a time-scheduled manner, which reduces the power consumption of the electronic shelf labels while improving the reliability of the RFID signal reception, thereby increasing the merchandise stock-taking accuracy, and reducing the labor cost as well as losses caused by human errors.

## Description

### RELATED APPLICATION

The present disclosure claims priority to Chinese Patent Application No. 202310595293.1 filed on May 24, 2023, which is herein incorporated by reference in its entirety.

### TECHNICAL FIELD

The present disclosure relates to the technical field of merchandise stock-taking, and particularly to a merchandise stock-taking method and system, a computer device, and a storage medium.

### BACKGROUND

Currently, large-scale supermarkets and hypermarkets worldwide are undergoing digital transformation and upgrading. In digital applications, electronic shelf labels are replacing traditional paper labels. In addition to displaying basic product prices and information, the electronic shelf labels may further be used in various applications, such as quick picking, out-of-stock management, rapid inventory counting, and human-computer interaction with users. However, the current practice for counting the actual on-shelf quantity of merchandises still primarily relies on manual stock-taking. To meet the real-time requirements of merchandise stock-taking, substantial daily human resources are required for counting tasks, which not only increases the labor cost of supermarkets, but also results in problems such as low stock-taking efficiency and poor accuracy.

### SUMMARY

To address the deficiencies in the prior art, the present disclosure provides a merchandise stock-taking method and system, a computer device and a storage medium, which solve the problems of low stock-taking efficiency and poor accuracy in the merchandise stock-taking methods in the prior art. Through the mutual communication among an autonomous mobile device, radio frequency identification (RFID) tags on merchandises, electronic shelf labels on a shelf and a base station, the present disclosure achieves the automatic stock-taking of shelf merchandises, thereby improving the merchandise stock-taking efficiency. By enabling the plurality of electronic shelf labels in a stock-taking area to receive tag identity information sent by the RFID tag in the stock-taking area in a close-range and in a time-scheduled manner, the present disclosure maintains low-power consumption characteristics of the electronic shelf labels while improving the reliability of the RFID signal reception, enhancing the accuracy of merchandise stock-taking.

In a first aspect, the present disclosure provides a merchandise stock-taking method, which is applied to a merchandise stock-taking system including an autonomous mobile device, a base station, an electronic shelf label on a shelf, and a radio frequency identification (RFID) tag attached to merchandise, and the electronic shelf label includes a wireless communication module for communicating with the base station and a reader for receiving an RFID signal, the method including: allocating, by the base station according to a label identification (ID) of at least one electronic shelf label corresponding to a current stock-taking area, an RFID signal reception time window for each of the at least one electronic shelf label; sending, by the autonomous mobile device, an RFID excitation signal, such that a plurality of RFID tags that receive the RFID excitation signal repeatedly send their tag identity information according to a random back-off mechanism, and the tag identity information includes a tag ID; receiving, by each of the at least one electronic shelf label according to the corresponding RFID signal reception time window, a plurality of tag identity information sent by the plurality of RFID tags through the reader; and obtaining, by the base station according to all the tag identity information received from each of the at least one electronic shelf label, current stock-taking data corresponding to the current stock-taking area. .

Optionally, before the allocating, by the base station according to the ID of the at least one electronic shelf label corresponding to the current stock-taking area, the RFID signal reception time window for each of the at least one electronic shelf label, the method further includes: collecting, by the autonomous mobile device, at least one visual image of the shelf at a current monitoring position; performing, by the autonomous mobile device, image recognition on the at least one visual image to identify at least one electronic shelf label included in the at least one visual image; and determining, by the autonomous mobile device, the at least one electronic shelf label as the electronic shelf label corresponding to the current stock-taking area, and sending the label ID of the at least one electronic shelf label to the base station.

Optionally, when the merchandise stock-taking system further includes a backend server, before the allocating, by the base station according to the ID of the at least one electronic shelf label corresponding to the current stock-taking area, the RFID signal reception time window for each of the at least one electronic shelf label, the method further includes: obtaining and sending, by the autonomous mobile device, a positioning coordinate of a current monitoring position to the backend server; setting, by the backend server, a preset coordinate range using the positioning coordinate as a reference, and obtaining the label ID of the at least one electronic shelf label having position information within the preset coordinate range; and determining, by the backend server, each of the at least one electronic shelf label as the electronic shelf label corresponding to the current stock-taking area, and sending the label ID of the at least one electronic shelf label to the base station.

Optionally, the sending, by the autonomous mobile device, the RFID excitation signal, such that the plurality of RFID tags that receive the RFID excitation signal repeatedly send their tag identity information according to the random back-off mechanism includes: sending, by the autonomous mobile device at a reception frequency point of the RFID tags, the RFID excitation signal carrying key information; verifying, by the RFID tags upon receiving the RFID excitation signal, the key information; and repeatedly sending, by the RFID tags after successful verification, their tag identity information at a sending frequency point according to the random back-off mechanism.

Optionally, the sending, by the autonomous mobile device, the RFID excitation signal, such that the plurality of RFID tags that receive the RFID excitation signal repeatedly send their tag identity information according to the random back-off mechanism includes: sending, by the autonomous mobile device at a reception frequency point of the RFID tags, the RFID excitation signal carrying first random data; and repeatedly sending, by the RFID tags upon receiving the RFID excitation signal, their tag identity information at a sending frequency point according to the random back-off mechanism, and the tag identity information further includes the first random data.

Optionally, the sending, by the autonomous mobile device, the RFID excitation signal, such that the plurality of RFID tags that receive the RFID excitation signal repeatedly send their tag identity information according to the random back-off mechanism includes: sending, by the autonomous mobile device at a reception frequency point of the RFID tags, the RFID excitation signal carrying key information and first random data; verifying, by the RFID tags upon receiving the RFID excitation signal, the key information; and repeatedly sending, by the RFID tags after successful verification, their tag identity information at a sending frequency point according to the random back-off mechanism, and the tag identity information further includes the first random data.

Optionally, the obtaining, by the base station according to all the tag identity information received from each of the at least one electronic shelf label, the current stock-taking data corresponding to the current stock-taking area includes: receiving, by the base station, second random data sent by the autonomous mobile device; and sequentially performing, by the base station according to the second random data, security verification on the first random data included in each tag identity information to obtain a plurality of tag identity information that succeeds in the verification, and the current stock-taking data is the plurality of tag identity information that succeeds in the verification.

Optionally, when the merchandise stock-taking system further includes a backend server, the method further includes: sending, by the base station, the plurality of tag identity information that succeeds in the verification to the backend server, such that the backend server performs categorization and counting on the plurality of tag identity information to obtain a stock-taking result for all merchandise in the current stock-taking area.

Optionally, the obtaining, by the base station according to all the tag identity information received from each of the at least one electronic shelf label, current stock-taking data corresponding to the current stock-taking area includes: receiving, by the base station, second random data sent by the autonomous mobile device; sequentially performing, by the base station according to the second random data, security verification on the first random data included in each tag identity information to obtain a plurality of tag identity information that succeeds in the verification; and performing, by the base station, deduplication and categorization and counting on the plurality of tag identity information that succeeds in the verification to obtain a stock-taking result for all merchandise in the current stock-taking area, and the current stock-taking data is the stock-taking result for all merchandise in the current stock-taking area.

Optionally, the receiving, by each of the at least one electronic shelf label according to the corresponding RFID signal reception time window, a plurality of tag identity information sent by the plurality of RFID tags through the reader includes: receiving, by each of the at least one electronic shelf label, a control instruction sent by the base station, and the control instruction includes the RFID signal reception time window and an RFID signal reception gain for each electronic shelf label; receiving, by each electronic shelf label according to the RFID signal reception time window and the RFID signal reception gain, the tag identity information sent by the plurality of RFID tags through the reader; and performing, by each electronic shelf label according to the tag ID, deduplication on all the received tag identity information, and sending the deduplicated tag identity information to the base station through the wireless communication module.

Optionally, the RFID excitation signal is further configured to provide electrical energy for the RFID tags; and/or, an overlapping duration of the RFID signal reception time window of each of the at least one electronic shelf label in a time dimension covers a sending time window of each RFID tag.

In a second aspect, the present disclosure provides a merchandise stock-taking method, which is applied to a base station in a merchandise stock-taking system, the merchandise stock-taking system further including an electronic shelf label on a shelf and a radio frequency identification (RFID) tag attached to merchandise, and the electronic shelf label includes a wireless communication module for communicating with the base station and a reader for receiving an RFID signal, the method including: allocating, by the base station according to a label identification (ID) of at least one electronic shelf label corresponding to a current stock-taking area, an RFID signal reception time window for each of the at least one electronic shelf label, such that each electronic shelf label receives a plurality of tag identity information sent by a plurality of RFID tags through the reader according to the RFID signal reception time window, and the tag identity information includes a tag ID; and receiving, by the base station, the plurality of tag identity information sent by each of the at least one electronic shelf label, and obtaining current stock-taking data corresponding to the current stock-taking area according to the plurality of tag identity information.

Optionally, when the merchandise stock-taking system further includes an autonomous mobile device, the obtaining, by the base station according to all the tag identity information received from each of the at least one electronic shelf label, the current stock-taking data corresponding to the current stock-taking area includes: receiving, by the base station, second random data sent by the autonomous mobile device; and sequentially performing, by the base station according to the second random data, security verification on first random data included in each tag identity information to obtain a plurality of tag identity information that succeeds in the verification; and the first random data is sent by the autonomous mobile device to the RFID tag, the RFID tag sends the tag identity information including the first random data to the base station through the electronic shelf label, and the current stock-taking data includes the plurality of tag identity information that succeeds in the verification.

Optionally, when the merchandise stock-taking system further includes an autonomous mobile device, the obtaining, by the base station according to all the tag identity information received from each of the at least one electronic shelf label, the current stock-taking data corresponding to the current stock-taking area includes: receiving, by the base station, second random data sent by the autonomous mobile device; sequentially performing, by the base station according to the second random data, security verification on first random data included in each tag identity information to obtain a plurality of tag identity information that succeeds in the verification; and performing, by the base station, deduplication and categorization and counting on the plurality of tag identity information that succeeds in the verification to obtain a stock-taking result for all merchandise in the current stock-taking area; and the first random data is sent by the autonomous mobile device to the RFID tag, the RFID tag sends the tag identity information including the first random data to the base station through the electronic shelf label, and the current stock-taking data is the stock-taking result for all merchandise in the current stock-taking area.

In a third aspect, the present disclosure provides a merchandise stock-taking method, which is applied to an electronic shelf label in a merchandise stock-taking system, the merchandise stock-taking system further including a base station and a radio frequency identification (RFID) tag attached to merchandise, and the electronic shelf label includes a wireless communication module for communicating with the base station and a reader for receiving an RFID signal, the method including: receiving, by at least one electronic shelf label in a current stock-taking area through the wireless communication module, an RFID signal reception time window sent by the base station; receiving, by each of the at least one electronic shelf label according to the corresponding RFID signal reception time window, a plurality of tag identity information sent by a plurality of RFID tags through the reader, and the tag identity information includes a tag identification (ID)each of the at least one electronic shelf label; and performing, by each electronic shelf label according to the tag ID, deduplication on the plurality of tag identity information, and sending the deduplicated plurality of tag identity information to the base station through the wireless communication module, such that the base station obtains current stock-taking data corresponding to the current stock-taking area according to the plurality of tag identity information.

In a fourth aspect, the present disclosure provides a merchandise stock-taking system, including an autonomous mobile device, a base station, an electronic shelf label on a shelf, and a radio frequency identification (RFID) tag attached to merchandise; the autonomous mobile device is configured to send an RFID excitation signal at a reception frequency point of the RFID tag; the RFID tag is configured to repeatedly send, upon receiving the RFID excitation signal, its tag identity information at a sending frequency point according to a random back-off mechanism; the base station is configured to obtain a label identification (ID) of each electronic shelf label among at least one electronic shelf label corresponding to a current stock-taking area, and allocate an RFID signal reception time window for each of the at least one electronic shelf label; the at least one electronic shelf label includes a wireless communication module for communicating with the base station and a reader or receiving an RFID signal; and each of the at least one electronic shelf label is configured to receive the RFID signal reception time window sent by the base station through the wireless communication module, and receive a plurality of tag identity information sent by a plurality of RFID tags through the reader according to the RFID signal reception time window, and the tag identity information includes a tag ID; and the base station is further configured to obtain current stock-taking data corresponding to the current stock-taking area according to the plurality of tag identity information.

Optionally, the autonomous mobile device is further configured to collect at least one visual image of a shelf at a current monitoring position; perform image recognition on the at least one visual image to identify at least one electronic shelf label included in the at least one visual image; take each of the at least one electronic shelf label as the electronic shelf label corresponding to the current stock-taking area, and send the label ID of each of the at least one electronic shelf label to the base station.

Optionally, the merchandise stock-taking system further includes a backend server configured to receive a positioning coordinate sent by the autonomous mobile device, set a preset coordinate range using the positioning coordinate as a reference, obtain the label ID of the at least one electronic shelf label having position information within the preset coordinate range, and send the label ID of each of the at least one electronic shelf label to the base station; and/or, the backend server is further configured to perform categorization and counting on all the tag identity information sent by the base station to obtain a stock-taking result for all merchandise in the current stock-taking area.

In a fifth aspect, the present disclosure provides a computer device, including a memory, a processor, and a computer program stored in the memory and executable in the processor, and when executing the computer program, the processor implements the following steps: allocating, by the base station according to a label identification (ID) of at least one electronic shelf label corresponding to a current stock-taking area, an RFID signal reception time window for each of the at least one electronic shelf label; sending, by the autonomous mobile device, an RFID excitation signal, such that a plurality of RFID tags that receive the RFID excitation signal repeatedly send their tag identity information according to a random back-off mechanism, and the tag identity information includes a tag ID; receiving, by each of the at least one electronic shelf label according to the corresponding RFID signal reception time window, a plurality of tag identity information sent by the plurality of RFID tags through the reader; and obtaining, by the base station according to all the tag identity information received from each of the at least one electronic shelf label, current stock-taking data corresponding to the current stock-taking area.

In a sixth aspect, the present disclosure provides a readable storage medium which stores a computer program, and when executed by a processor, the computer program implements the following steps: allocating, by the base station according to a label identification (ID) of at least one electronic shelf label corresponding to a current stock-taking area, an RFID signal reception time window for each of the at least one electronic shelf label; sending, by the autonomous mobile device, an RFID excitation signal, such that a plurality of RFID tags that receive the RFID excitation signal repeatedly send their tag identity information according to a random back-off mechanism, and the tag identity information includes a tag ID; receiving, by each of the at least one electronic shelf label according to the corresponding RFID signal reception time window, a plurality of tag identity information sent by the plurality of RFID tags through the reader; and obtaining, by the base station according to all the tag identity information received from each of the at least one electronic shelf label, current stock-taking data corresponding to the current stock-taking area.

Compared with the prior art, the present disclosure has the following advantageous effects.
1. In the present disclosure, the autonomous mobile device sends an RFID excitation signal in the stock-taking area, such that all RFID tags in the stock-taking area that receive the excitation signal repeatedly send their tag identity information within a certain duration, and a plurality of electronic shelf labels in the stock-taking area receive the tag identity information in a time-scheduled manner. The base station then counts the merchandise stock-taking result in the stock-taking area according to all the tag identity information sent by the plurality of electronic shelf labels. Therefore, through the mutual communication among the autonomous mobile device, the RFID tags on the merchandise, the electronic shelf labels on the shelf and the base station, the present disclosure realizes the automatic stock-taking of shelf merchandise, thereby improving the stock-taking efficiency and reducing the labor cost of supermarkets.
2. In the present disclosure, a plurality of electronic shelf labels in the stock-taking area receive the tag identity information sent by the RFID tags in the stock-taking area at a short distance and in a time-scheduled manner, which maintains low-power consumption characteristics of the electronic shelf labels while improving the reliability of the RFID signal reception, thereby increasing the merchandise stock-taking accuracy.
3. Compared with the traditional stock-taking system based on the RFID reader, the present disclosure has advantages mainly reflected in denser reception time windows and receiving modules for RFID signal reception based on the electronic shelf labels, which further improves the stock-taking accuracy and the system stability. Compared with the existing RFID stock-taking method in which a fixed transceiver antenna is installed or the stock-taking method using the handheld reader, the stock-taking method that receives the RFID signal through the electronic shelf labels also improves the installation flexibility and efficiency of the stock-taking system, and reduces the labor cost as well as losses caused by human errors.

### BRIEF DESCRIPTION OF THE DRAWINGS

FIG. 1 illustrates a flowchart of a merchandise stock-taking method according to an embodiment of the present disclosure;
FIG. 2 illustrates a structural diagram of a merchandise stock-taking system according to an embodiment of the present disclosure;
FIG. 3 illustrates a schematic diagram of the relationship between an electronic shelf label reception time window and an RFID tag sending duration according to an embodiment of the present disclosure;
FIG. 4 illustrates a schematic diagram of an electronic shelf label receiving an RFID signal according to an embodiment of the present disclosure;
FIG. 5 illustrates a flowchart of a merchandise stock-taking method according to anther embodiment of the present disclosure; and
FIG. 6 illustrates a flowchart of still a merchandise stock-taking method according to anther embodiment of the present disclosure.

### DESCRIPTION OF THE EMBODIMENTS

In order that the objectives, the technical solutions and the advantages of embodiments of the present disclosure are clearer, the technical solutions in the embodiments of the present disclosure will be clearly and completely described below with reference to the drawings. Obviously, those described are part, rather than all, of the embodiments of the present disclosure. Based on the embodiments in the present disclosure, any other embodiment obtained by those of ordinary skilled in the art without paying any inventive effort should fall within the protection scope of the present disclosure.

In a first aspect, the present disclosure provides a merchandise stock-taking method, specifically including the following embodiments.

### Embodiment 1

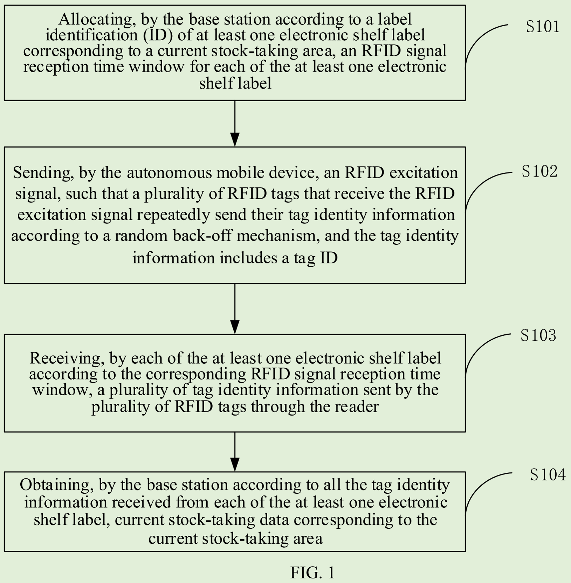

FIG. 1 illustrates a flowchart of a merchandise stock-taking method according to an embodiment of the present disclosure. The merchandise stock-taking method is applied to a merchandise stock-taking system, which includes an autonomous mobile device, a base station, an electronic shelf label on a shelf, and an RFID tag attached to merchandise, and the electronic shelf label includes a wireless communication module for communicating with the base station and a reader for receiving an RFID signal. As illustrated in FIG. 1, the merchandise stock-taking method specifically includes the following steps.

Step S101: allocating, by the base station according to a label identification (ID) of at least one electronic shelf label corresponding to a current stock-taking area, an RFID signal reception time window for each of the at least one electronic shelf label.

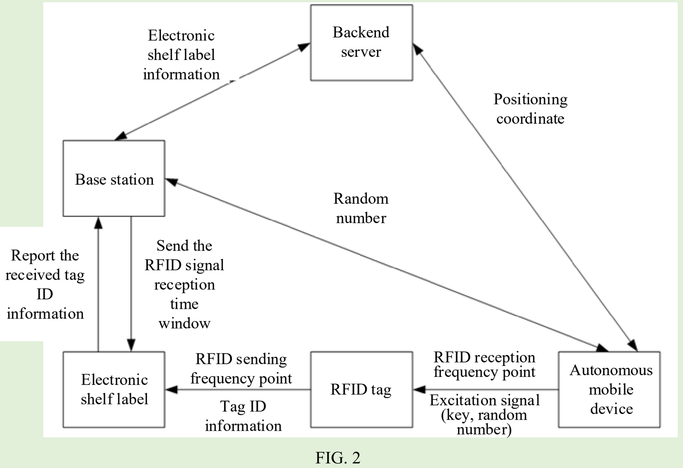

It should be noted that, as illustrated in FIG. 2, the merchandise stock-taking system includes an autonomous mobile device, a base station, an electronic shelf label on a shelf, and an RFID tag attached to commodity. The electronic shelf label is in communication with the base station through a wireless communication module, and receives an RFID signal sent by the RFID tag through a reader. The autonomous mobile device sends an RFID excitation signal to the RFID tag, thereby enabling the RFID tag to convert the excitation signal into energy for power supply and also enabling the RFID tag to send its identity information according to the excitation signal. Further, the merchandise stock-taking system may further include a backend server, and the backend server, the base station, and the electronic shelf label constitute an electronic shelf label system in a supermarket or hypermarket. The merchandise stock-taking system, built on the basis of the electronic shelf label system, further includes an autonomous mobile device and an RFID tag attached to each merchandise. The autonomous mobile device may be, for example, an inspection robot or a stock-taking robot. In this embodiment, the RFID tag may be of a type including passive, semi-passive, or active, and the reader may also obtain Received Signal Strength Indicator (RSSI), Phase, and Timestamp.

In this embodiment, the merchandise stock-taking system is applied in a shopping mall or a warehouse based on the electronic shelf label system. The autonomous mobile device is movable independently within the shopping mall or the warehouse, and each area it moves to corresponds to a specific stock-taking area. Therefore, the current stock-taking area is the one corresponding to a current monitoring position of the autonomous mobile device. In order to obtain the label ID of the electronic shelf label corresponding to the current stock-taking area, the following two modes may be adopted.

Mode 1: the autonomous mobile device collects at least one visual image of the shelf at a current monitoring position; the autonomous mobile device performs image recognition on each of the at least one visual image to identify at least one electronic shelf label included in each of the at least one visual image; and the autonomous mobile device takes each of the at least one electronic shelf label as the electronic shelf label corresponding to the current stock-taking area, and sends the label ID of each of the at least one electronic shelf label to the base station.

It should be noted that, when including an image collection device, the autonomous mobile device collects at least one visual image of one or more shelves at the current monitoring position. The visual images include images of one or more shelves from a plurality of viewing angles. How the autonomous mobile device collects the image at the current monitoring position is not specifically limited in this solution, as long as the visual image of the shelf can be obtained. Further, the autonomous mobile device performs image recognition on all the collected visual images, identifies the identity information of each electronic shelf label in the visual images, and sends the label ID representing the identity information of the electronic shelf label to the base station, thereby enabling the base station to obtain the label ID of the electronic shelf label corresponding to the current stock-taking area.

Mode 2: the autonomous mobile device obtains and sends positioning coordinates of a current monitoring position to a backend server; the backend server sets a preset coordinate range using the positioning coordinate as a reference, and obtains the label ID of the at least one electronic shelf label having position information within the preset coordinate range; the backend server determines each of the at least one electronic shelf label as the electronic shelf label corresponding to the current stock-taking area, and sending the label ID of each of the at least one electronic shelf label to the base station.

It should be noted that, when not including the image collection device, the autonomous mobile device may send the positioning coordinate of the current monitoring position and detection time to the backend server, thereby enabling the backend server to find the electronic shelf label within the preset coordinate range centered on the positioning coordinate, according to the pre-stored position information of each electronic shelf label. For example, the electronic shelf labels within 1 meter from the positioning coordinate may be taken as the at least one electronic shelf label corresponding to the current stock-taking area. The backend server then sends the label ID of each of the at least one electronic shelf label to the base station.

In this embodiment, after obtaining the label ID of electronic shelf labels corresponding to the current stock-taking area, the base station allocates an RFID signal receiving reception window to each of the at least one electronic shelf label, and the time window for each electronic shelf label may be the same or different. For example, if there are 30 electronic shelf labels corresponding to the current stock-taking area, and the base station allocates 5 different RFID signal reception time windows to the 30 electronic shelf labels, then a plurality of electronic shelf labels may share one RFID signal reception time window. The allocation may be an average distribution based on the number of the electronic shelf labels and the number of the reception time windows, or a non-average distribution adaptively adjusted depending on different application scenarios.

In this embodiment, the base station allocates the RFID signal reception time window to each of the at least one electronic shelf label for the following purposes: (1) in practical applications, due to the reasons such as environmental interference, frequency point interference, and mutual positional relationships, there is a problem that the electronic shelf label cannot receive the RFID signal sent by the RFID tag. However, in this solution, each RFID tag repeatedly sends its identity information within a certain duration, and the allocation of the signal reception time window for each electronic shelf label enables a plurality of electronic shelf labels to receive the identity information sent by a same RFID tag within different time windows, thereby improving the reliability of the RFID signal reception and, consequently, increasing the accuracy of stock-taking data. (2) The power consumption of the electronic shelf label can be reduced by allowing each electronic shelf label to receive the RFID signal in a time-scheduled manner. It can be seen that this embodiment can reduce the power consumption of the electronic shelf label while ensuring the reliability of the RFID signal reception.

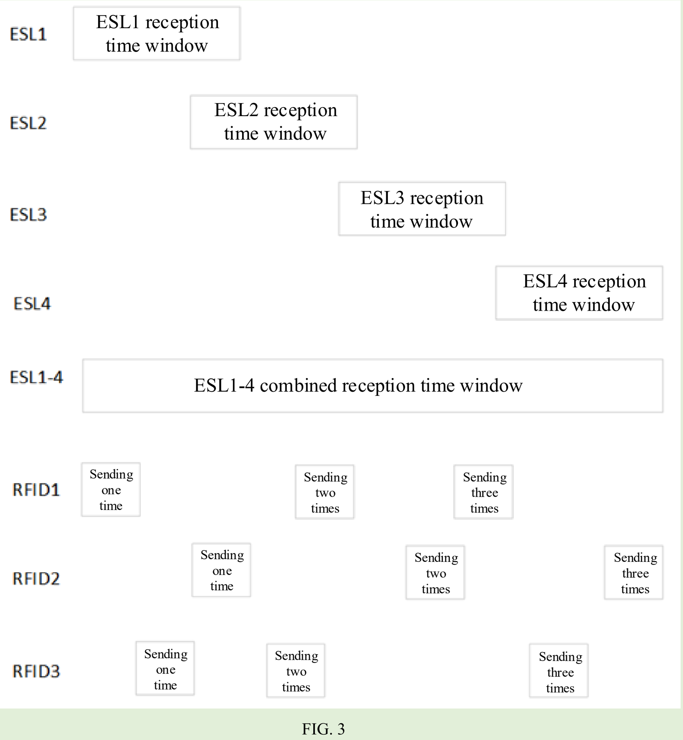

In addition, in order to ensure that the RFID signal sent by the RFID tag can be fully received, it is necessary for an overlapping duration of the RFID signal reception time window of each of the at least one electronic shelf label to cover a sending time window of each RFID tag. If there are 4 different RFID reception time windows, then the overlapping duration of the 4 RFID reception time windows should be longer than a total duration of the RFID signal transmission by each RFID tag. As illustrated in FIG. 3, a total combined receiving duration of the electronic shelf labels 1 to 4 in the time dimension fully covers a total duration of multiple RFID signal transmissions by the electronic shelf labels 1 to 3.

Step S102: sending, by the autonomous mobile device, an RFID excitation signal, such that a plurality of RFID tags that receive the RFID excitation signal repeatedly send their tag identity information according to a random back-off mechanism, and the tag identity information includes a tag ID.

It should be noted that, in order to prevent the mutual collision between the RFID signals, the reception frequency point and the sending frequency point of the RFID tags in this embodiment are different from each other. Specifically, the autonomous mobile device sends the RFID excitation signal at the reception frequency point of the RFID tag to activate the RFID tag, so that a plurality of RFID tags that receive the RFID excitation signal repeatedly send their tag IDs within a certain duration, and the RFID excitation signal is further configured to provide electrical energy for the RFID tags.

Step S103: receiving, by each of the at least one electronic shelf label according to the corresponding RFID signal reception time window, a plurality of tag identity information sent by the plurality of RFID tags through the reader.

It should be noted that, each electronic shelf label receives a plurality of tag identity information sent by the plurality of RFID tags in a time-scheduled manner according to the corresponding reception time window, and sends the plurality of tag identity information to the base station through a wireless communication module. The reader may be a circuit separated from or integrated into a main microcontroller unit (MCU) of the electronic shelf label.

Step S104: obtaining, by the base station according to all the tag identity information received from each of the at least one electronic shelf label, current stock-taking data corresponding to the current stock-taking area.

It should be noted that, the current stock-taking data corresponding to the current stock-taking area in this embodiment may either be a final stock-taking result corresponding to all the merchandise in the current stock-taking area, or a plurality of tag identity information obtained by the base station after performing deduplication and validity verification on all the tag identity information. The base station then sends the plurality of tag identity information to the backend server, thereby enabling the server to count a final stock-taking result corresponding to all the merchandise in the current stock-taking area according to the merchandise information associated with each tag identity information.

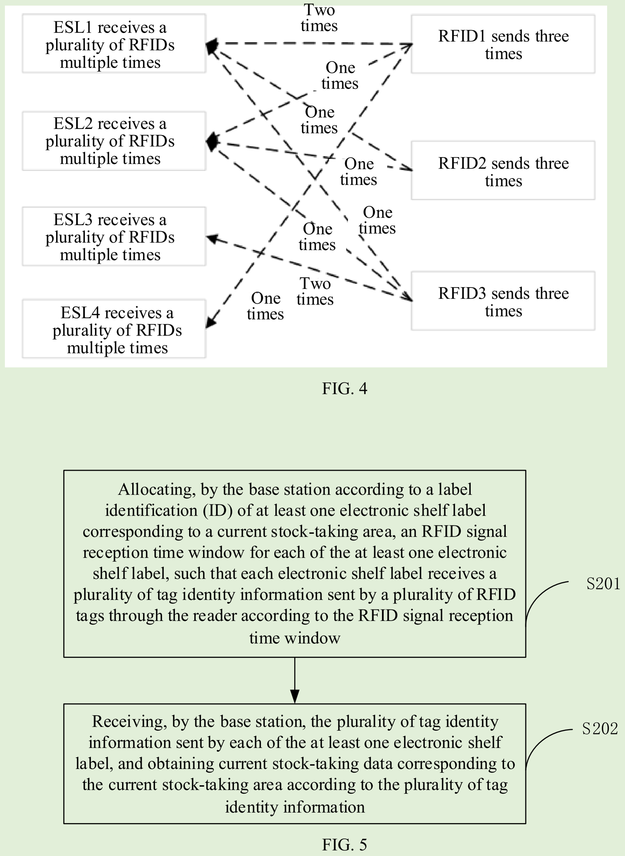

In this embodiment, in order to ensure the accuracy of the stock-taking data, the RFID tag sends its tag identity information multiple times within a certain time period according to a random back-off mechanism, thereby enabling a plurality of nearby electronic shelf labels to receive the tag information of the same RFID tag multiple times. As illustrated in FIG. 4, RFID tag 1 sends its identity information four times, the electronic shelf label 1 receives the identity information two times, the electronic shelf label 2 receives the identity information one time, and the electronic shelf label 4 receives the identity information one time. However, the RFID tag 1 only represents a single item of one merchandise type, and it is necessary to perform deduplication on the same RFID tag ID received by different electronic shelf labels to obtain the accurate counting of the merchandise in the detection area.

Compared with the prior art, this embodiment has the following advantageous effects.
1. In the present disclosure, the autonomous mobile device sends an RFID excitation signal in the stock-taking area, such that all RFID tags in the stock-taking area that receive the excitation signal repeatedly send their tag identity information within a certain duration, and a plurality of electronic shelf labels in the stock-taking area receive the tag identity information in a time-scheduled manner. The base station then counts the merchandise stock-taking result in the stock-taking area according to all the tag identity information sent by the plurality of electronic shelf labels. Therefore, through the mutual communication among the autonomous mobile device, the RFID tags on the merchandise, the electronic shelf labels on the shelf and the base station, the present disclosure realizes the automatic stock-taking of shelf merchandise, thereby improving the stock-taking efficiency and reducing the labor cost of supermarkets.
2. In the present disclosure, a plurality of electronic shelf labels in the stock-taking area receive the tag identity information sent by the RFID tag in the stock-taking area at a short distance and in a time-scheduled manner, which reduces the power consumption of the electronic shelf labels while improving the reliability of the RFID signal reception, thereby increasing the merchandise stock-taking accuracy.
3. Compared with the traditional stock-taking system based on the RFID reader, the present disclosure has advantages mainly reflected in denser reception time windows and receiving modules for RFID signal reception based on the electronic shelf labels, which further improves the stock-taking accuracy and the system stability. Compared with the existing RFID stock-taking method in which a fixed transceiver antenna is installed or the stock-taking method using the handheld reader, the stock-taking method that receives the RFID signal through the electronic shelf labels also improves the installation flexibility and efficiency of the stock-taking system, and reduces the labor cost as well as losses caused by human errors.

### Embodiment 2

In this embodiment, the step in which the autonomous mobile device sends an RFID excitation signal, such that the plurality of RFID tags that receive the RFID excitation signal repeatedly send their tag identity information according to a random back-off mechanism includes: sending, by the autonomous mobile device at a reception frequency point of the RFID tags, the RFID excitation signal carrying key information; verifying, by the RFID tags upon receiving the RFID excitation signal, the key information; repeatedly sending, by the RFID tags after successful verification, their tag identity information at a sending frequency point according to the random back-off mechanism.

It should be noted that, in order to further improve the stock-taking accuracy, the autonomous mobile device sets a random number for each stock-taking and carries the information of the random number for the stock-taking in the RFID excitation signal. The RFID tag verifies a local key against key information in the received excitation signal, and after successful verification, repeatedly sends its tag ID at the sending frequency point according to the random back-off mechanism. In this embodiment, the information included in the RFID excitation signal may include a signal type, a stock-taking key, etc., and the signal type includes, but is not limited to, a preset instruction and a stock-taking instruction. In a case where the RFID excitation signal sent by the autonomous mobile device includes a preset instruction and a stock-taking key, the RFID tag stores the stock-taking key locally, which is used to verify the key information carried in the excitation signal when the excitation signal including the stock-taking instruction is received, thereby improving the accuracy and security of stock-taking.

Further, the step in which the autonomous mobile device sends an RFID excitation signal, such that the plurality of RFID tags that receive the RFID excitation signal repeatedly send their tag identity information according to a random back-off mechanism further includes: sending, by the autonomous mobile device at a reception frequency point of the RFID tags, the RFID excitation signal carrying first random data; repeatedly sending, by the RFID tags upon receiving the RFID excitation signal, their tag identity information at a sending frequency point according to the random back-off mechanism, and the tag identity information further includes the first random data.

As an example, the step in which the autonomous mobile device sends an RFID excitation signal, such that the plurality of RFID tags that receive the RFID excitation signal repeatedly send their tag identity information according to a random back-off mechanism includes: sending, by the autonomous mobile device at a reception frequency point of the RFID tags, the RFID excitation signal carrying key information and first random data; verifying, by the RFID tags upon receiving the RFID excitation signal, the key information; repeatedly sending, by the RFID tags after successful verification, their tag identity information at a sending frequency point according to the random back-off mechanism, and the tag identity information further includes the first random data.

In this embodiment, the step in which the base station obtains current stock-taking data corresponding to the current stock-taking area according to all the tag identity information received from each of the at least one electronic shelf label includes: receiving, by the base station, second random data sent by the autonomous mobile device; and sequentially performing, by the base station according to the second random data, security verification on the first random data included in each tag identity information to obtain a plurality of tag identity information that succeeds in the verification, and the current stock-taking data is the plurality of tag identity information that succeeds in the verification.

In this embodiment, when the merchandise stock-taking system includes the backend server, the method further includes: sending, by the base station, the plurality of tag identity information that succeeds in the verification to the backend server, such that the backend server performs categorization and counting on the plurality of tag identity information to obtain a stock-taking result for all merchandise in the current stock-taking area.

In another embodiment, the step in which the base station obtains current stock-taking data corresponding to the current stock-taking area according to all the tag identity information received from each of the at least one electronic shelf label includes: receiving, by the base station, second random data sent by the autonomous mobile device; sequentially performing, by the base station according to the second random data, security verification on the first random data included in each tag identity information to obtain a plurality of tag identity information that succeeds in the verification; performing, by the base station, deduplication and categorization and counting on the plurality of tag identity information that succeeds in the verification to obtain a stock-taking result for all merchandise in the current stock-taking area, and the current stock-taking data is the stock-taking result for all merchandise in the current stock-taking area.

It should be noted that, in order further improve the stock-taking accuracy, a random number verification by the base station is added on the basis of the key verification performed by the RFID tag. Specifically, the excitation signal sent by the autonomous mobile device to the RFID tag further includes the first random data, such that the first random data, together with the tag ID of the RFID tag, is forwarded to the base station through the electronic shelf label. The base station then performs security verification between the first random data carried in the tag identity information sent by the electronic shelf label and the second random data sent by the autonomous mobile device, and deduplication or categorization and counting is performed after the security verification is successful, and the entity which obtains the merchandise stock-taking result by performing categorization and counting on all the tag identity information may be either the base station or the backend server. In addition, the first random data and the second random data may be the same. In this case, the verification mode is to determine whether the two random data are the same, and if so, the verification is successful. The first random data and the second random data may also be different, but there must be a mathematical conversion that associates the two random numbers. In this case, the verification mode is to determine whether the two random data satisfy the association relationship through the mathematical conversion, and if so, the verification is successful. Further, the distinction between a key and a random number is that the key cannot be changed frequently, but the random number can be changed randomly. The RFID tag is used to verify the key and forward the random number, and finally the base station verifies the random number, thereby forming a closed-loop security verification mechanism.

In still another embodiment, the step in which each of the at least one electronic shelf label receives the plurality of tag identity information sent by the plurality of RFID tags through the reader, according to the corresponding RFID signal reception time window includes: receiving, by each of the at least one electronic shelf label, a control instruction sent by the base station, and the control instruction includes the RFID signal reception time window and an RFID signal reception gain for each electronic shelf label; receiving, by each electronic shelf label according to the RFID signal reception time window and the RFID signal reception gain, the tag identity information sent by the plurality of RFID tags through the reader; and performing, by each electronic shelf label according to the tag ID, deduplication on all the received tag identity information, and sending the deduplicated tag identity information to the base station through the wireless communication module.

It should be noted that, in order to avoid problems such as an excessive data volume or too many RFID collisions caused by the overly large RFID reception range for each electronic shelf label, the control instruction sent by the base station to the electronic shelf label further includes the RFID signal reception gain, which is used to control a distance range within which the electronic shelf label can receive the RFID signal.

### Embodiment 3

FIG. 5 illustrates a flowchart of a merchandise stock-taking method according to another embodiment of the present disclosure, which is applied to a base station in a merchandise stock-taking system. The merchandise stock-taking system further includes an electronic shelf label on a shelf and an RFID tag attached to merchandise, and the electronic shelf label includes a wireless communication module for communicating with the base station and a reader for receiving an RFID signal. As illustrated in FIG. 5, the merchandise stock-taking method specifically includes the following steps.

Step S201: allocating, by the base station according to a label identification (ID) of at least one electronic shelf label corresponding to a current stock-taking area, an RFID signal reception time window for each of the at least one electronic shelf label, such that each electronic shelf label receives a plurality of tag identity information sent by a plurality of RFID tags through the reader according to the RFID signal reception time window.

In this embodiment, the tag identity information includes a tag ID.

In a first implementation of this embodiment, the merchandise stock-taking system further includes an autonomous mobile device. The method for the base station to obtain the label ID of the at least one electronic shelf label corresponding to the current stock-taking area includes: collecting, by the autonomous mobile device, at least one visual image of the shelf at a current monitoring position; performing, by the autonomous mobile device, image recognition on each of the at least one visual image to identify at least one electronic shelf label included in each of the at least one visual image; and determining, by the autonomous mobile device, each of the at least one electronic shelf label as the electronic shelf label corresponding to the current stock-taking area, and sending the label ID of each of the at least one electronic shelf label to the base station.

In a second implementation of this embodiment, the merchandise stock-taking system further includes an autonomous mobile device. The method for the base station to obtain the label ID of the at least one electronic shelf label corresponding to the current stock-taking area includes: obtaining and sending, by the autonomous mobile device, a positioning coordinate of a current monitoring position to the backend server; setting, by the backend server, a preset coordinate range using the positioning coordinate as a reference, and obtaining the label ID of the at least one electronic shelf label having position information within the preset coordinate range; and determining, by the backend server, each of the at least one electronic shelf label as the electronic shelf label corresponding to the current stock-taking area, and sending the label ID of each of the at least one electronic shelf label to the base station.

Step S202: receiving, by the base station, the plurality of tag identity information sent by each of the at least one electronic shelf label, and obtaining current stock-taking data corresponding to the current stock-taking area according to the plurality of tag identity information.

In this embodiment, when the merchandise stock-taking system further includes the autonomous mobile device, the step in which the obtaining, by the base station according to all the tag identity information received from each of the at least one electronic shelf label, the current stock-taking data corresponding to the current stock-taking area each of the at least one electronic shelf label includes: receiving, by the base station, second random data sent by the autonomous mobile device; and sequentially performing, by the base station according to the second random data, security verification on first random data included in each tag identity information to obtain a plurality of tag identity information that succeeds in the verification, and the first random data is sent by the autonomous mobile device to the RFID tag, the RFID tag sends the tag identity information including the first random data to the base station through the electronic shelf label, and the current stock-taking data includes the plurality of tag identity information that succeeds in the verification.

In this embodiment, when the merchandise stock-taking system further includes the autonomous mobile device, the step in which the obtaining, by the base station according to all the tag identity information received from each of the at least one electronic shelf label, the current stock-taking data corresponding to the current stock-taking area includes: receiving, by the base station, second random data sent by the autonomous mobile device; sequentially performing, by the base station according to the second random data, security verification on first random data included in each tag identity information to obtain a plurality of tag identity information that succeeds in the verification; and performing, by the base station, deduplication and categorization and counting on the plurality of tag identity information that succeeds in the verification to obtain a stock-taking result for all merchandise in the current stock-taking area, and the first random data is sent by the autonomous mobile device to the RFID tag, the RFID tag send the tag identity information including the first random data to the base station through the electronic shelf label, and the current stock-taking data is the stock-taking result for all merchandise in the current stock-taking area.

Compared with the prior art, this embodiment has the following advantageous effects.

In the present disclosure, the base station allocates RFID signal reception time windows to a plurality of electronic shelf labels in the stock-taking area, such that the electronic shelf labels receive the RFID tag ID signal which represents the tag identity information sent by the nearby RFID tags during their respective time windows. Next, based on all the tag identity information forwarded by the electronic shelf labels, stock-taking of the merchandise in the stock-taking area is conducted. Therefore, through the mutual communication among the RFID tags on the merchandise, the electronic shelf labels on the shelf and the base station, the present disclosure realizes the automatic stock-taking of shelf merchandise, thereby improving the stock-taking efficiency and reducing the labor cost of supermarkets. Further, through the RFID signal reception time windows allocated by the base station, each electronic shelf label receives a plurality of RFID signals sent by the plurality of RFID tags in a time-scheduled manner, which reduces the power consumption of the electronic shelf labels while improving the reliability of the RFID signal reception, thereby increasing the merchandise stock-taking accuracy.

### Embodiment 4

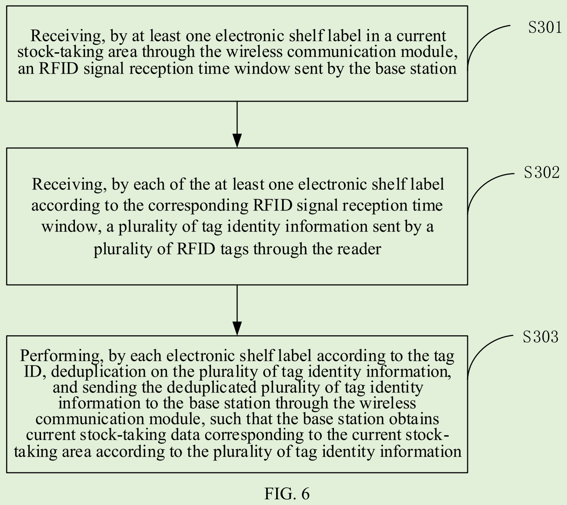

FIG. 6 illustrates a flowchart of a merchandise stock-taking method according to still another embodiment of the present disclosure, which is applied to an electronic shelf label in a merchandise stock-taking system. The merchandise stock-taking system further includes a base station and an RFID tag attached to merchandise, and the electronic shelf label includes a wireless communication module for communicating with the base station and a reader for receiving an RFID signal. As illustrated in FIG. 6, the merchandise stock-taking method specifically includes the following steps.

Step S301: receiving, by at least one electronic shelf label in a current stock-taking area through the wireless communication module, an RFID signal reception time window sent by the base station.

Step S302: receiving, by each of the at least one electronic shelf label according to the corresponding RFID signal reception time window, a plurality of tag identity information sent by a plurality of RFID tags through the reader.

Step S303: performing, by each electronic shelf label according to the tag ID, deduplication on the plurality of tag identity information, and sending the deduplicated plurality of tag identity information to the base station through the wireless communication module, such that the base station obtains current stock-taking data corresponding to the current stock-taking area according to the plurality of tag identity information.

Compared with the prior art, this embodiment has the following advantageous effects.

In the present disclosure, the electronic shelf label receives the RFID signal reception time window sent by the base station, and then receives the RFID signal representing the tag identity information sent by nearby RFID tags in a time-scheduled manner. After that, all the received tag identity information is deduplicated and sent to the base station, such that the base station conducts stock-taking on merchandise in the stock-taking area according to all the deduplicated tag identity information. Therefore, through the mutual communication among the RFID tags on the merchandise, the electronic shelf labels on the shelf and the base station, the present disclosure realizes the automatic stock-taking of shelf merchandise, thereby improving the stock-taking efficiency and reducing the labor cost of supermarkets. Further, through the RFID signal reception time windows allocated by the base station, each electronic shelf label receives a plurality of RFID signals sent by the plurality of RFID tags in a time-scheduled manner, which reduces the power consumption of the electronic shelf labels while improving the reliability of the RFID signal reception, thereby increasing the merchandise stock-taking accuracy.

In a second aspect, the present disclosure provides a merchandise stock-taking system as illustrated in FIG. 2, including: an autonomous mobile device, a base station, an electronic shelf label on a shelf, and an RFID tag attached to merchandise. The autonomous mobile device is configured to send an RFID excitation signal at a reception frequency point of the RFID tag. The RFID tag is configured to repeatedly send, upon receiving the RFID excitation signal, its tag identity information at a sending frequency point according to a random back-off mechanism. The base station is configured to obtain a label ID of each electronic shelf label among at least one electronic shelf label corresponding to a current stock-taking area, and allocate an RFID signal reception time window for each of the at least one electronic shelf label. Each of the at least one electronic shelf label includes a wireless communication module for communicating with the base station and a reader for receiving an RFID signal. Each of the at least one electronic shelf label is configured to receive the RFID signal reception time window sent by the base station through the wireless communication module, and receive a plurality of tag identity information sent by a plurality of RFID tags through the reader according to the RFID signal reception time window, and the tag identity information includes a tag ID. The base station is further configured to obtain current stock-taking data corresponding to the current stock-taking area according to the plurality of tag identity information.

In this embodiment, the autonomous mobile device is further configured to collect at least one visual image of a shelf at a current monitoring position; perform image recognition on each of the at least one visual image to identify at least one electronic shelf label included in each of the at least one visual image; take each of the at least one electronic shelf label as the electronic shelf label corresponding to the current stock-taking area, and send the label ID of each of the at least one electronic shelf label to the base station.

In this embodiment, the stock-taking system further includes a backend server, which is configured to receive positioning coordinate sent by the autonomous mobile device, set a preset coordinate range using the positioning coordinate as a reference, obtain the label ID of the at least one electronic shelf label having position information within the preset coordinate range, and send the label ID of each of the at least one electronic shelf label to the base station; and/or, the backend server is further configured to perform categorization and counting on all the tag identity information sent by the base station to obtain a stock-taking result for all merchandise in the current stock-taking area.

In a third aspect, an embodiment of the present disclosure provides a computer device, including a memory, a processor, and a computer program stored in the memory and executable in the processor. When executing the computer program, the processor implements the following steps: allocating, by the base station according to a label identification (ID) of at least one electronic shelf label corresponding to a current stock-taking area, an RFID signal reception time window for each of the at least one electronic shelf label; sending, by the autonomous mobile device, an RFID excitation signal, such that a plurality of RFID tags that receive the RFID excitation signal repeatedly send their tag identity information according to a random back-off mechanism, and the tag identity information includes a tag ID; receiving, by each of the at least one electronic shelf label according to the corresponding RFID signal reception time window, a plurality of tag identity information sent by the plurality of RFID tags through the reader; and obtaining, by the base station according to all the tag identity information received from each of the at least one electronic shelf label, current stock-taking data corresponding to the current stock-taking area.

In a fourth aspect, an embodiment of the present disclosure provides a readable storage medium which stores a computer program. When executed by a processor, the computer program implements the following steps: allocating, by the base station according to a label identification (ID) of at least one electronic shelf label corresponding to a current stock-taking area, an RFID signal reception time window for each of the at least one electronic shelf label; sending, by the autonomous mobile device, an RFID excitation signal, such that a plurality of RFID tags that receive the RFID excitation signal repeatedly send their tag identity information according to a random back-off mechanism, and the tag identity information includes a tag ID; receiving, by each of the at least one electronic shelf label according to the corresponding RFID signal reception time window, a plurality of tag identity information sent by the plurality of RFID tags through the reader; and obtaining, by the base station according to all the tag identity information received from each of the at least one electronic shelf label, current stock-taking data corresponding to the current stock-taking area.

Those of ordinary skill in the art could understand that all or part of the flows for implementing the methods of the above embodiments may be implemented by instructing related hardware through a computer program. The computer program may be stored in a nonvolatile computer-readable storage medium, and when executed, the computer program may include the flows of the methods of the above embodiments. In this embodiment, any reference to the memory, the storage, the database, or other media used in the embodiments provided in the present disclosure may include a non-volatile and/or volatile memory. The nonvolatile memory may include a read-only memory (ROM), a programmable ROM (PROM), an electrically programmable ROM (EPROM), an electrically erasable programmable ROM (EEPROM) or a flash memory. The volatile memory may include a random-access memory (RAM) or an external cache memory. By way of illustration and not limitation, the RAM is available in various forms, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus Dynamic RAM (RDRAM).

It should be noted that in the present disclosure, relational terms such as "first" and "second" are only used to distinguish one entity or operation from another entity or operation, and do not necessarily require or imply that there is any such actual relationship or order between these entities or operations. Moreover, the term "comprise", "include" or any other variation thereof is intended to cover non-exclusive inclusions, so that a procedure, a method, an article or a device, which includes a series of elements, includes not only those elements, but also other elements not explicitly listed or elements inherent to the procedure, the method, the article or the device. Without further restriction, an element defined by a phrase "including a ..." does not exclude the existence of other identical elements in the procedure, the method, the article or the device including the element.

## Claims

1. A merchandise stock-taking method, which is applied to a merchandise stock-taking system, wherein the merchandise stock-taking system comprises an autonomous mobile device, a base station, an electronic shelf label on a shelf, and a radio frequency identification (RFID) tag attached to merchandise, and the electronic shelf label comprises a wireless communication module for communicating with the base station, and a reader for receiving an RFID signal, the method comprising:
allocating, by the base station according to a label identification (ID) of at least one electronic shelf label corresponding to a current stock-taking area, an RFID signal reception time window for each of the at least one electronic shelf label;
sending, by the autonomous mobile device, an RFID excitation signal, such that a plurality of RFID tags that receive the RFID excitation signal repeatedly send their tag identity information according to a random back-off mechanism, wherein the tag identity information comprises a tag ID;
receiving, by each of the at least one electronic shelf label according to the corresponding RFID signal reception time window, a plurality of tag identity information sent by the plurality of RFID tags through the reader; and
obtaining, by the base station according to all the tag identity information received from each of the at least one electronic shelf label, current stock-taking data corresponding to the current stock-taking area.

2. The merchandise stock-taking method according to claim 1, wherein before the allocating, by the base station according to the ID of the at least one electronic shelf label corresponding to the current stock-taking area, the RFID signal reception time window for each of the at least one electronic shelf label, the method further comprises:
collecting, by the autonomous mobile device, at least one visual image of the shelf at a current monitoring position;
performing, by the autonomous mobile device, image recognition on each of the at least one visual image to obtain at least one electronic shelf label included in each of the at least one visual image; and
determining, by the autonomous mobile device, each of the at least one electronic shelf label as the electronic shelf label corresponding to the current stock-taking area, and sending the label ID of each of the at least one electronic shelf label to the base station.

3. The merchandise stock-taking method according to claim 1, wherein when the merchandise stock-taking system further comprises a backend server, before the allocating, by the base station according to the ID of the at least one electronic shelf label corresponding to the current stock-taking area, the RFID signal reception time window for each of the at least one electronic shelf label, the method further comprises:
obtaining and sending, by the autonomous mobile device, a positioning coordinate of a current monitoring position to the backend server;
setting, by the backend server, a preset coordinate range using the positioning coordinate as a reference, and obtaining the label ID of the at least one electronic shelf label having position information within the preset coordinate range; and
determining, by the backend server, each of the at least one electronic shelf label as the electronic shelf label corresponding to the current stock-taking area, and sending the label ID of each of the at least one electronic shelf label to the base station.

4. The merchandise stock-taking method according to claim 1, wherein the sending, by the autonomous mobile device, the RFID excitation signal, such that the plurality of RFID tags that receive the RFID excitation signal repeatedly send their tag identity information according to the random back-off mechanism comprises:
sending, by the autonomous mobile device at a reception frequency point of the RFID tags, the RFID excitation signal carrying key information;
verifying, by the RFID tags upon receiving the RFID excitation signal, the key information;
and
repeatedly sending, by the RFID tags after successful verification, their tag identity information at a sending frequency point according to the random back-off mechanism.

5. The merchandise stock-taking method according to claim 1, wherein the sending, by the autonomous mobile device, the RFID excitation signal, such that the plurality of RFID tags that receive the RFID excitation signal repeatedly send their tag identity information according to the random back-off mechanism comprises:
sending, by the autonomous mobile device at a reception frequency point of the RFID tags, the RFID excitation signal carrying first random data; and
repeatedly sending, by the RFID tags upon receiving the RFID excitation signal, their tag identity information at a sending frequency point according to the random back-off mechanism, wherein the tag identity information further comprises the first random data.

6. The merchandise stock-taking method according to claim 1, wherein the sending, by the autonomous mobile device, the RFID excitation signal, such that the plurality of RFID tags that receive the RFID excitation signal repeatedly send their tag identity information according to the random back-off mechanism comprises:
sending, by the autonomous mobile device at a reception frequency point of the RFID tags, the RFID excitation signal carrying key information and first random data;
verifying, by the RFID tags upon receiving the RFID excitation signal, the key information;
and
repeatedly sending, by the RFID tags after successful verification, their tag identity information at a sending frequency point according to the random back-off mechanism, wherein the tag identity information further comprises the first random data.

7. The merchandise stock-taking method according to claim 5 or 6, wherein the obtaining, by the base station according to all the tag identity information received from each of the at least one electronic shelf label, the current stock-taking data corresponding to the current stock-taking area comprises:
receiving, by the base station, second random data sent by the autonomous mobile device;
and
sequentially performing, by the base station according to the second random data, security verification on the first random data included in each tag identity information to obtain a plurality of tag identity information that succeeds in the verification, wherein the current stock-taking data is the plurality of tag identity information that succeeds in the verification.

8. The merchandise stock-taking method according to claim 7, wherein when the merchandise stock-taking system further comprises a backend server, the method further comprises:
sending, by the base station, the plurality of tag identity information that succeeds in the verification to the backend server, such that the backend server performs categorization and counting on the plurality of tag identity information to obtain a stock-taking result for all merchandise in the current stock-taking area.

9. The merchandise stock-taking method according to claim 5 or 6, wherein the obtaining, by the base station according to all the tag identity information received from each of the at least one electronic shelf label, current stock-taking data corresponding to the current stock-taking area comprises:
receiving, by the base station, second random data sent by the autonomous mobile device;
sequentially performing, by the base station according to the second random data, security verification on the first random data included in each tag identity information to obtain a plurality of tag identity information that succeeds in the verification; and
performing, by the base station, deduplication and categorization and counting on the plurality of tag identity information that succeeds in the verification to obtain a stock-taking result for all merchandise in the current stock-taking area, wherein the current stock-taking data is the stock-taking result for all merchandise in the current stock-taking area.

10. The merchandise stock-taking method according to claim 1, wherein the receiving, by each of the at least one electronic shelf label according to the corresponding RFID signal reception time window, a plurality of tag identity information sent by the plurality of RFID tags through the reader comprises:
receiving, by each of the at least one electronic shelf label, a control instruction sent by the base station, wherein the control instruction comprises the RFID signal reception time window and an RFID signal reception gain for each electronic shelf label;
receiving, by each electronic shelf label according to the RFID signal reception time window and the RFID signal reception gain, the tag identity information sent by the plurality of RFID tags through the reader; and
performing, by each electronic shelf label according to the tag ID, deduplication on all the received tag identity information, and sending the deduplicated tag identity information to the base station through the wireless communication module.

11. The merchandise stock-taking method according to any one of claims 1 to 6, 8 and 10, wherein
the RFID excitation signal is further configured to provide electrical energy for the RFID tags;
and/or, an overlapping duration of the RFID signal reception time window of each of the at least one electronic shelf label in a time dimension covers a sending time window of each RFID tag.

12. A merchandise stock-taking method, which is applied to a base station in a merchandise stock-taking system, the merchandise stock-taking system further comprising an electronic shelf label on a shelf and a radio frequency identification (RFID) tag attached to merchandise, wherein the electronic shelf label comprises a wireless communication module for communicating with the base station and a reader for receiving an RFID signal, the method comprising:
allocating, by the base station according to a label identification (ID) of at least one electronic shelf label corresponding to a current stock-taking area, an RFID signal reception time window for each of the at least one electronic shelf label, such that each electronic shelf label receives a plurality of tag identity information sent by a plurality of RFID tags through the reader according to the RFID signal reception time window, wherein the tag identity information comprises a tag ID; and
receiving, by the base station, the plurality of tag identity information sent by each of the at least one electronic shelf label, and obtaining current stock-taking data corresponding to the current stock-taking area according to the plurality of tag identity information.

13. The merchandise stock-taking method according to claim 12, wherein when the merchandise stock-taking system further comprises an autonomous mobile device, the obtaining, by the base station according to all the tag identity information received from each of the at least one electronic shelf label, the current stock-taking data corresponding to the current stock-taking area comprises:
receiving, by the base station, second random data sent by the autonomous mobile device;
and
sequentially performing, by the base station according to the second random data, security verification on first random data included in each tag identity information to obtain a plurality of tag identity information that succeeds in the verification;
wherein the first random data is sent by the autonomous mobile device to the RFID tag, the RFID tag sends the tag identity information comprising the first random data to the base station through the electronic shelf label, and the current stock-taking data comprises the plurality of tag identity information that succeeds in the verification.

14. The merchandise stock-taking method according to claim 12, wherein when the merchandise stock-taking system further comprises an autonomous mobile device, the obtaining, by the base station according to all the tag identity information received from each of the at least one electronic shelf label, the current stock-taking data corresponding to the current stock-taking area comprises:
receiving, by the base station, second random data sent by the autonomous mobile device;
sequentially performing, by the base station according to the second random data, security verification on first random data included in each tag identity information to obtain a plurality of tag identity information that succeeds in the verification; and
performing, by the base station, deduplication and categorization and counting on the plurality of tag identity information that succeeds in the verification to obtain a stock-taking result for all merchandise in the current stock-taking area;
wherein the first random data is sent by the autonomous mobile device to the RFID tag, the RFID tag sends the tag identity information comprising the first random data to the base station through the electronic shelf label, and the current stock-taking data is the stock-taking result for all merchandise in the current stock-taking area.

15. A merchandise stock-taking method, which is applied to an electronic shelf label in a merchandise stock-taking system, the merchandise stock-taking system further comprising a base station and a radio frequency identification (RFID) tag attached to merchandise, wherein the electronic shelf label comprises a wireless communication module for communicating with the base station and a reader for receiving an RFID signal, the method comprising:
receiving, by at least one electronic shelf label in a current stock-taking area through the wireless communication module, an RFID signal reception time window sent by the base station;
receiving, by each of the at least one electronic shelf label according to the corresponding RFID signal reception time window, a plurality of tag identity information sent by a plurality of RFID tags through the reader, wherein the tag identity information comprises a tag identification (ID); and
performing, by each electronic shelf label according to the tag ID, deduplication on the plurality of tag identity information, and sending the deduplicated plurality of tag identity information to the base station through the wireless communication module, such that the base station obtains current stock-taking data corresponding to the current stock-taking area according to the plurality of tag identity information.

16. A merchandise stock-taking system, comprising:
an autonomous mobile device, a base station, an electronic shelf label on a shelf, and a radio frequency identification (RFID) tag attached to merchandise;
the autonomous mobile device is configured to send an RFID excitation signal at a reception frequency point of the RFID tag;
the RFID tag is configured to repeatedly send, upon receiving the RFID excitation signal, its tag identity information at a sending frequency point according to a random back-off mechanism;
the base station is configured to obtain a label identification (ID) of each electronic shelf label among at least one electronic shelf label corresponding to a current stock-taking area, and allocate an RFID signal reception time window for each of the at least one electronic shelf label;
the at least one electronic shelf label comprises a wireless communication module for communicating with the base station and a reader for receiving an RFID signal; and each of the at least one electronic shelf label is configured to receive the RFID signal reception time window sent by the base station through the wireless communication module, and receive a plurality of tag identity information sent by a plurality of RFID tags through the reader according to the RFID signal reception time window, wherein the tag identity information comprises a tag ID; and
the base station is further configured to obtain current stock-taking data corresponding to the current stock-taking area according to the plurality of tag identity information.

17. The merchandise stock-taking system according to claim 16, wherein the autonomous mobile device is further configured to collect at least one visual image of a shelf at a current monitoring position; perform image recognition on the at least one visual image to obtain at least one electronic shelf label included in each of the at least one visual image; take each of the at least one electronic shelf label as the electronic shelf label corresponding to the current stock-taking area, and send the label ID of each of the at least one electronic shelf label to the base station.

18. The merchandise stock-taking system according to claim 16, further comprising a backend server configured to receive a positioning coordinate sent by the autonomous mobile device, set a preset coordinate range using the positioning coordinate as a reference, obtain the label ID of the at least one electronic shelf label having position information within the preset coordinate range, and send the label ID of each of the at least one electronic shelf label to the base station;
and/or, the backend server is further configured to perform categorization and counting on all the tag identity information sent by the base station to obtain a stock-taking result for all merchandise in the current stock-taking area.

19. A computer device, comprising a memory, a processor, and a computer program stored in the memory and executable in the processor, wherein when executing the computer program, the processor implements the steps of the method according to any one of claims 1 to 15.

20. A readable storage medium which stores a computer program, wherein when executed by a processor, the computer program implements the steps of the method according to any one of claims 1 to 15.
